# EUROPEAN PATENT APPLICATION

(11) **EP 4 697 403 A1**
(43) Date of publication of application: **18.02.2026**
(21) Application number: 24788050.3
(22) Date of filing: 09.04.2024
(51) Int. Cl.: H01M 4/134, H01M 4/46, H01M 4/62, H01M 4/139, H01M 4/36, H01M 10/052, H01M 10/0525, H01M 10/058

(54) **NEGATIVE-ELECTRODE ENHANCEMENT FILM FOR SECONDARY BATTERY, AND SECONDARY BATTERY AND ELECTRIC APPARATUS**

(30) Priority: 12.04.2023 CN 202310392435
(71) Applicant: Zhejiang Shengxing Technology Co., Ltd, Hangzhou, Zhejiang 311121 (CN)
(72) Inventor: SUN, Minghao, Hangzhou, Zhejiang 311604 (CN); LIU, Yanyan, Hangzhou, Zhejiang 311604 (CN)
(74) Representative: Finetti, Claudia
(86) International application number: PCT/CN2024/086766
(87) International publication number: WO 2024/212947

(57) **Abstract**

The present invention relates to a negative-electrode enhancement film for a secondary battery. The negative-electrode enhancement film comprises at least one structural layer which is in contact with a negative-electrode substrate layer, wherein the structural layer is at least partially embedded into the negative electrode substrate layer. In the present invention, a structural layer forms a convex-concave structure on the surface of a negative-electrode substrate layer, such that the specific surface area of a negative electrode sheet can be effectively increased, the charging and discharging capacity of an electrode and the compatibility with a side effect are improved, and the rate capability and the capacity retention rate of a battery are also improved.

## Description

### Technical Field

The present disclosure relates to the field of secondary batteries, and in particular to a negative-electrode enhancement film for a secondary battery, a secondary battery and an electric apparatus.

### Background Art

Along with the rapid development of the society, the energy crisis and the environmental problems caused by the burning of fossil fuels are becoming increasingly serious. It is urgent to develop efficient reusable energy storage materials and improve the utilization rate of the existing renewable energy sources. Alkali metal and alkaline earth metal secondary batteries, such as lithium secondary batteries and sodium secondary batteries, have the advantages of long cycle life, high energy density, low self-discharge rate, good thermal stability and zero memory effect, and have become a hot subject for research in the field of new energy sources. The negative electrode materials for alkali metal and alkaline earth metal secondary batteries generally include carbon-based negative electrode materials, silicon-based negative electrode materials, tin-based negative electrode materials, metal negative electrode materials, etc. Different materials have different performance characteristics. Taking lithium secondary batteries as an example, currently, the main negative electrode materials for lithium secondary batteries are modified graphite, mesocarbon microbeads, etc. The specific capacity of these materials is low. The theoretical specific capacity of graphite is only 372 mAh/g. This limits further increase of the energy density of lithium secondary batteries. The theoretical specific capacity of silicon-based negative electrode materials is as high as 4200 mAh/g (Li₂₂/Si₅), and the electrode potential is moderate. Silicon has abundant reserves, and is environmentally friendly. However, silicon materials experience a dramatic volume expansion effect (over 300%) during lithium intercalation, and the electrode active material is prone to peeling and powdering during charge/discharge. It continuously forms an electrolyte interface (SEI) film in the electrolyte, which reduces the charge/discharge efficiency, continuously consumes the electrolyte, increases the internal resistance of the battery, and causes capacity decay. Silicon has poor electrical conductivity, which seriously hinders the use of pure silicon as a negative electrode material for lithium secondary batteries.

Metal negative electrode materials have high capacity, and can significantly improve the energy density of battery systems and extend battery life. Among them, alkali metal and alkaline earth metal negative electrode materials have attracted the most widespread attention. Taking a metallic lithium negative electrode as an example, due to its high theoretical specific capacity and lowest redox potential, there are high hopes for it. It's believed that the metallic lithium negative electrode is expected to become an ideal negative electrode material in the next generation of high energy density lithium secondary batteries. However, due to the low specific surface area of the metallic lithium negative electrode, its current density in practical use is much higher than that of traditional porous electrodes such as graphite and silicon porous electrodes, which further leads to easy formation of lithium dendrites during the use of the metallic lithium negative electrode. Moreover, there are problems such as unstable electrode interface structure, violent side reactions, and continuous formation of SEI film, which causes serious concerns about battery safety, reduces battery life, and hinders the practical use of the lithium negative electrode. Similar problems also exist with metal negative electrodes such as sodium, potassium, and calcium negative electrodes. Therefore, there is a need to solve the problems of dendrite formation, violent side reactions, and short battery cycle life caused by low specific surface area and excessive current density during the use of metal negative electrodes.

At present, there are still some technical problems that need to be overcome in the solutions of increasing the specific surface area of secondary battery negative electrode plates in the industry. Three-dimensional current collectors can increase the specific surface area of metal negative electrodes. Taking a metallic lithium negative electrode as an example, "Coralloid Carbon Fiber-Based Composite Lithium Anode for Robust Lithium Metal Batteries", "Stabilizing Lithium Metal Anodes by Uniform Li-Ion Flux Distribution in Nanochannel Confinement" and the like reported the use of electronic conductors or non-electronic conductors as three-dimensional current collectors to construct metallic lithium negative electrodes with large specific surface area, thereby reducing the current density of the negative electrode during battery cycling and thus reducing the possibility of forming lithium dendrites. However, the amount of SEI formed is proportional to the specific surface area of the negative electrode. Although the three-dimensional current collector increases the specific surface area of the metal negative electrode, reduces the current density, and inhibits growth of metal dendrites, it also increases the total amount of the electrolyte and/or active materials consumed during the formation and/or regeneration of SEI, which is not conducive to improving the battery cycle life.

In order to further increase the cycle life of a metal negative electrode, it is necessary not only to increase the specific surface area of the metal negative electrode, reduce the current density of the negative electrode during battery use, and inhibit formation of dendrites and SEI, but also to reduce the consumption of electrolyte and/or active material during the formation and/or regeneration of SEI. Using an inactive substance instead of an active substance for the formation and/or regeneration of SEI can reduce the consumption of active matter during the formation and/or regeneration of SEI, thereby further increasing the cycle life of a metal negative electrode for secondary batteries.

### Summary

In order to solve the problems existing in the prior art, the present application provides a negative-electrode enhancement film layer for a secondary battery, which can effectively increase the specific surface area of the metal negative electrode plate, reduce the current density of the negative electrode during the charge/discharge process, improve the electrode charge/discharge ability and the electrode's tolerance to side reactions in the battery, reduce the thickness of the negative electrode protection film (SEI), prevent SEI from excessively passivating the negative electrode, and inhibit formation of metal dendrites. At the same time, the negative-electrode enhancement film can reduce the excessive formation of SEI under high temperature conditions and improve the capacity retention and electrochemical performance of the secondary battery. At the same time, by providing an inactive metal layer on the negative-electrode substrate layer and increasing the specific surface area of the negative-electrode substrate layer with the use of the negative-electrode enhancement film layer, inactive metal can replace active metal to participate in the formation and/or regeneration of SEI, thereby alleviating the consumption of active components by consuming inactive components, and increasing the service life of the battery.

In a secondary battery, the active material undergoes reversible valence changes and reversible electrochemical reactions during a charge/discharge process. The inactive metal layer or alloy layer (such as a metallic sodium layer or a sodium alloy layer) is a functional auxiliary material for achieving uniform deposition of the active material and eliminating dendrite growth. It is not embedded in the positive electrode material or the positive electrode material is preferentially embedded in the active material. Therefore, the inactive metal element ions in the inactive layer cannot be reversibly intercalated into and deintercalated out of the positive electrode material. That is, the metal element in the inactive layer cannot reversibly gain and lose electrons during the charge/discharge process of the battery. In other words, it cannot reversibly participate in the charge/discharge of the battery. Therefore, it's defined as an inactive layer. This functional auxiliary material is a key material for forming the negative electrode protection film (SEI) and dynamically repairing the negative electrode protection film. Therefore, it is also one of the core foundations of the present disclosure.

According to a first aspect of the present application, there is provided a negative-electrode enhancement film for a secondary battery, wherein the negative-electrode enhancement film includes at least one structural layer in contact with a negative-electrode substrate layer, wherein the structural layer is at least partially embedded in the negative-electrode substrate layer, and the structural layer increases the specific surface area of the negative-electrode substrate layer.

In some embodiments of the present application, the structural layer is a particle layer, wherein the particle layer includes nanoparticles and/or microparticles, and at least a portion of the surface of at least a portion of the nanoparticles and/or microparticles is in contact with the negative-electrode substrate layer.

In some embodiments of the present application, the structural layer is a mesh layer, which includes nanomeshes and/or micromeshes, and at least a portion of the surface of at least a portion of the nanomeshes and/or micromeshes is in contact with the negative-electrode substrate layer.

In some embodiments of the present application, the negative-electrode substrate layer is an inactive layer, including a metal layer and/or an alloy layer selected from sodium, potassium, magnesium and calcium.

In some embodiments of the present application, the structural layer does not chemically react with an electrolyte. Preferably, the structural layer does not chemically react with an electrolyte, an active species, a metal layer, and/or an alloy layer.

In some embodiments of the present application, the structural layer includes a component selected from at least one of elemental non-metals, oxides, fluorides, carbides, carbon materials, nitrides, and silicides.

In some embodiments of the present application, the structural layer is provided in at least one of the following ways:
(1) The structural layer is provided between the negative-electrode substrate layer and a negative electrode current collector;
(2) The structural layer is provided between the negative-electrode substrate layer and a separator;
(3) The structural layer is provided on one side of the negative-electrode substrate layer away from a negative electrode current collector;
(4) The structural layer is embedded in the negative-electrode substrate layer in a discontinuous manner to form an integrated structure;
(5) The structural layer is provided between a positive electrode plate and a separator, and the structural layer abuts against the separator to be at least partially embedded in the negative-electrode substrate layer;
(6) The structural layer is embedded in a separator in a discontinuous manner to form an integrated structure.

In some embodiments of the present application, at least a portion of the nanoparticles and/or microparticles of the structural layer do not penetrate the negative-electrode substrate layer, and form a convex-concave structure on a surface of the negative-electrode substrate layer.

In some embodiments of the present application, the structural layer further comprises a lithium-containing compound.

In some embodiments of the present application, the negative-electrode enhancement film includes two structural layers, and the two structural layers are both provided on the same side of the negative-electrode substrate layer or respectively provided on two sides of the negative-electrode substrate layer.

In some embodiments of the present application, the two structural layers independently include any one or any combination of nanoparticles, microparticles, nanomeshes, and micromeshes. In some embodiments of the present application, the negative-electrode enhancement film has a thickness of 0.01 µm-100 µm.

In some embodiments of the present application, the negative-electrode enhancement film has an areal density of 0.01mg/cm²-30mg/cm².

In some embodiments of the present application, the structural layer includes particles having a median particle size D₅₀ of between 5 nm and 50 µm.

According to a second aspect of the present application, there is provided a secondary battery, including a positive electrode plate, an electrolyte, a negative electrode plate having a negative-electrode substrate layer, and the negative-electrode enhancement film.

In some embodiments of the present application, the electrolyte comprises a metal element acting as an active species, wherein the metal is different from the at least one metal element in the negative-electrode substrate layer, and the metal element has a redox reaction potential that is lower than that of the at least one metal element in the negative-electrode substrate layer.

In some embodiments of the present application, the active material of the positive electrode plate does not undergo a reversible electrochemical reaction with the at least one metal element in the negative-electrode substrate layer or preferentially undergoes a reversible electrochemical reaction with the metal element acting as an active species; preferably, the active material of the positive electrode plate is of a polyanion salt type, a metal oxide type and/or a compounding type.

In some embodiments of the present application, the at least one metal element in the negative-electrode substrate layer is selected from sodium, potassium, magnesium and calcium, and the metal element acting as an active species is at least one of lithium, sodium, potassium, magnesium and calcium.

In some embodiments of the present application, the metal element is lithium, and the negative-electrode substrate layer is an inactive layer, including sodium metal or sodium alloy.

In some embodiments of the present application, the structural layer further comprises a lithium compound.

In some embodiments of the present application, the electrolyte comprises at least one anion selected from fluorine-containing anions; preferably, at least one selected from bis(fluorosulfonyl)imide anion, hexafluorophosphate, bis(trifluoromethanesulfonyl)imide anion, difluorooxalatoborate, tetrafluoroborate, hexafluoroarsenate and difluorophosphate.

In some embodiments of the present application, the electrolyte comprises a solvent selected from at least one of ether compounds, acetal compounds, and ketal compounds.

According to a second aspect of the present application, there is provided an electric apparatus comprising the secondary battery.

Compared with the prior art, the negative-electrode enhancement film layer of the present application can increase the specific surface area of the metal negative electrode plate, reduce the current density of the negative electrode during the battery charge/discharge process, and improve the ability of the negative electrode plate to tolerate side reactions, so as to tolerate the influences of the impurities, the side reactions, and the interactions between the positive and negative electrodes that may exist in a secondary battery. Moreover, the negative-electrode enhancement film layer can improve the charge/discharge ability of the electrode, and the average current density per unit area is reduced greatly, which is conducive to reducing the overcurrent range of the protection film (SEI) and accommodating SEI which is thicker or has lower ion conductivity. The polarization of the battery is reduced, and the battery's rate capability is improved. The formation of an alloy layer is favored, and the alloying reaction of the negative electrode is promoted. At the same time, the nano- or micro-structural layer on the surface of the metal negative electrode plate reduces the probability of short circuit between the positive and negative electrodes, making the battery safer. Moreover, the structural layer in the negative-electrode enhancement film is free of thermal shrinkage, which overcomes the problem of poor cycle stability caused by volume expansion of the existing negative electrode materials and reduces the probability of thermal runaway of batteries. The negative-electrode enhancement film can inhibit excessive formation of SEI at high temperatures and further optimize the battery's capacity retention, kinetic characteristics and service life. In the present disclosure, the structural layer forms a convex-concave structure on the surface of the negative-electrode substrate layer, which can effectively increase the specific surface area of the negative electrode plate, improve the charge/discharge ability of the electrode and the electrode's tolerance to side reactions (not only tolerance to side reactions occurring during the use of the battery, but also tolerance to side reactions occurring during the battery manufacturing process (such as polluting reactions)), and at the same time improve the battery's rate capability.

These and other features and advantages will become apparent from a reading of the following detailed description taken in conjunction with the associated drawings. It is to be understood that both the foregoing general description and the following detailed description are illustrative only, and are not restrictive of the aspects as claimed.

### Description of the Drawings

FIG. 1 is a schematic view of a reinforcement film being provided on a current collector according to a specific embodiment of the present application.
FIG. 2 is a schematic view of a reinforcement film being provided under a negative electrode plate according to a specific embodiment of the present application.
FIG. 3 is a schematic view of a reinforcement film being provided over a negative electrode plate according to a specific embodiment of the present application.
FIG. 4 is a schematic view of a reinforcement film being provided under a separator according to a specific embodiment of the present application.
FIG. 5 is a schematic view of a reinforcement film being provided in the negative electrode plate according to a specific embodiment of the present application.
FIG. 6 is a schematic view of a reinforcement film being provided in a separator according to a specific embodiment of the present application.

### Detailed Description

The present application will be described in detail below with reference to the accompanying drawings, and the features of the present application will be further revealed in the following specific description.

The ranges disclosed herein are defined with lower and upper limits. A given range is defined by selecting a lower limit and an upper limit, and the selected lower and upper limits define the boundaries of the particular range. The ranges defined this way may be inclusive or exclusive of the end values, and the end values may be combined arbitrarily, i.e., any lower limit may be combined with any upper limit to form a range. For example, if ranges of 60-120 and 80-110 are listed for a particular parameter, it is appreciated that ranges of 60-110 and 80-120 are also contemplated. Furthermore, if minimum range values of 1 and 2 are listed, and if maximum range values of 3, 4, and 5 are listed, then the following ranges are all contemplated: 1-3, 1-4, 1-5, 2-3, 2-4, and 2-5. In the present application, unless otherwise specified, the numerical range "a-b" is a simplified representation for any combination of real numbers between a and b, wherein a and b are both real numbers. For example, the numerical range "0-5" means that all real numbers between "0-5" have been listed herein, and "0-5" is just a simplified representation of these numerical combinations. In addition, when a parameter is characterized using an integer ≥ 2, it is equivalent to a disclosure that the parameter is, for example, an integer of 2, 3, 4, 5, 6, 7, 8, 9, 10, 11, 12, etc.

In the present application, unless otherwise specified, all embodiments and preferred embodiments mentioned herein can be combined with each other to form new technical solutions. In the present application, unless otherwise specified, all technical features and preferred features mentioned herein can be combined with each other to form new technical solutions.

In the present application, unless otherwise specified, the terms "include" and "comprise" mentioned herein may be open-ended or close-ended. For example, the terms "include" and "comprise" may mean that other components not listed may also be included or comprised, or that only the listed components are included or comprised.

As used herein, unless otherwise specified, the term "or" is inclusive. For example, the phrase "A or B" means "A, B, or both A and B". More specifically, the condition "A or B" is satisfied by any of the following conditions: A is true (or present) and B is false (or absent); A is false (or absent) and B is true (or present); or both A and B are true (or present).

It should be understood that, in the description of the present disclosure, the directional or positional relationship indicated by such terms as "center", "longitudinal", "lateral", "length", "width", "thickness", "upper", "lower", "front", "back", "left", "right", "vertical", "horizontal", "top", "bottom", "inside", "outside" and the like is based on the directional or positional relationship shown in the accompanying drawings, only for the sake of facilitating description of the present disclosure and simplifying the description, rather than indicating or implying that the apparatus or element referred to must have a particular orientation, be configured or operated in a particular orientation. Therefore, it should not be construed that the present disclosure is limited thereby. In addition, the terms "first", "second", and the like are used for descriptive purposes only, and cannot be construed as indicating or implying relative importance or implicitly indicating the quantity of the indicated technical features. Therefore, the features defined with "first", "second" or the like may explicitly or implicitly include one or more of such features. In the description of the present disclosure, unless otherwise specified, "a plurality of" means two or more.

It should be noted that, in the description of the present disclosure, unless otherwise expressly specified and defined, the terms "provide", "couple" and "connect" should be interpreted in a broad sense. For example, connection may be a fixed connection, a detachable connection, or an integral connection; it may be a mechanical connection or an electrical connection; it may be a direct connection or an indirect connection via a medium; or it may be an internal communication between two elements. For those skilled in the art, the specific meanings of the above terms in the present disclosure may be understood based on specific circumstances.

In the description of the present disclosure, the term "contact" includes direct or indirect contact or abutment. For example, the structural layer may directly contact the negative electrode plate, or the two may contact/abut against each other via a separator. Similarly, the term "embedded" includes direct or indirect embedment. For example, a structural layer may be directly embedded in a negative electrode plate, or the structural layer may be embedded in the negative electrode plate via a separator.

In the present disclosure, the negative-electrode enhancement film for a secondary battery includes at least one structural layer in contact with the negative-electrode substrate layer in the negative electrode plate of the secondary battery, and the structural layer is at least partially embedded in the negative-electrode substrate layer. In some embodiments, the structural layer includes nanoparticles and/or microparticles, and at least a portion of the surface of at least a portion of the nanoparticles and/or microparticles is in contact with the negative-electrode substrate layer. In some embodiments, the median particle size D₅₀ of the nanoparticles and/or microparticles is 1 nm-50 µm, 5 nm-45 µm, 10 nm-40 µm, 20 nm-30 µm, or any numerical range consisting of the end values of the above ranges. It should be emphasized particularly that, although the above numerical values are listed in parallel, it does not mean that all numerical ranges consisting of any two of the above numerical values as endpoints can achieve equivalent or similar performances. This point applies to the numerical ranges mentioned hereafter. The preferred embodiments of the present application are selected solely based on the detailed discussion and the specific experimental data below. In an optional embodiment of the present application, 10nm≤D₅₀≤50µm. In the present disclosure, when the median particle size D₅₀ is controlled within the above range, the particles can form a concave-convex morphology with a sufficient depth or height on the surface of the negative-electrode substrate layer, thereby fully increasing the specific surface area, reducing the current density of the negative electrode, improving the tolerance to side reactions, and inhibiting excessive formation of SEI under high temperature conditions. At the same time, it can be ensured that at least a portion of the particles will not completely penetrate the negative-electrode substrate layer.

In some embodiments, the structural layer may be a structure of at least two layers that are adjacent or separated. In some embodiments, the at least two layers may be provided on the same side of the negative-electrode substrate layer (for example, both provided under or over the negative-electrode substrate layer), or provided respectively on two sides of the negative-electrode substrate layer (for example, provided separately over and under the negative-electrode substrate layer). Furthermore, the at least two layers each independently include nanoparticles and/or microparticles. For example, the particles of the at least two layers are all nanoparticles or microstructured layer, or the particles of at least one layer are nanoparticles and the particles of at least another layer are microparticles. In some embodiments, the structural layer does not chemically react with the electrolyte used in the secondary battery. In a preferred embodiment, the structural layer does not chemically react with any of the electrolyte and active species used in the secondary battery, and the metal layer or alloy layer used in the negative-electrode substrate layer. In a specific embodiment, the nanoparticles or microparticles of the structural layer are selected from non-metallic particles that do not react with the electrolyte. Preferably, the structural layer includes at least one component selected from elemental non-metalls, oxides, fluorides, carbides, carbon materials, nitrides, and silicides. In a specific embodiment, the structural layer includes particles selected from at least one of sodium fluoride, lithium fluoride, aluminum oxide, and boron nitride, which can maintain the structural stability of the negative-electrode enhancement film layer, thereby continuously maintaining the high specific surface area of the negative electrode, reducing the current density of the negative electrode, and increasing the service life of the battery.

In some embodiments, the negative-electrode substrate layer includes an alkali metal, an alkaline earth metal, or an alloy thereof. Unlike the prior art lithium secondary batteries in which lithium ions and sodium ions are used concurrently as carriers, the alkali metal, alkaline earth metal or alloy thereof (for example, sodium metal or sodium alloy) in the negative-electrode substrate layer in this embodiment cannot reversibly participate in the transmission or transfer of charges during the charge/discharge process of the battery. Therefore, in the present disclosure, the alkali metal, alkaline earth metal or alloy thereof (for example, sodium metal or sodium alloy) is referred to as an inactive layer. According to the present disclosure, cations of a single metal are used as carriers, which is conducive to reducing the costs in the manufacturing, use and management of the battery. Taking a lithium secondary battery as an example, lithium ions are reduced to the form of metallic lithium during charging, and the metallic lithium is oxidized to lithium ions during discharging. Hence, the active material is metallic lithium. However, sodium does not undergo reversible valence changes during the charge/discharge process, so the metallic sodium or sodium alloy is an inactive material. The metallic sodium or sodium alloy layer is defined as an inactive layer. Nevertheless, sodium or sodium alloy is a functional auxiliary material for achieving uniform deposition of metallic lithium. This auxiliary material provides sodium element for the formation and/or regeneration of the SEI film, thereby reducing the consumption rate of lithium ions.

In the present disclosure, the structural layer and the negative-electrode substrate layer are compacted tightly by cold pressing or hot pressing, forming convex or concave structures on the surface of the negative-electrode substrate layer, thereby increasing the specific surface area of the negative-electrode substrate layer. In a specific embodiment, the structural layer is provided between a negative-electrode substrate layer and a negative electrode current collector. For example, the structural layer (for example, layered particles) is provided on the current collector, and then the negative-electrode substrate layer is pressed onto the structural layer provided on the current collector. Alternatively, the structural layer is provided over or under the negative-electrode substrate layer, and the structural layer is directly pressed onto the negative-electrode substrate layer with the use of the current collector.

In a specific embodiment, the structural layer is provided on a side of the negative-electrode substrate layer away from the negative electrode current collector. For example, the structural layer is provided on a side of the negative-electrode substrate layer away from the negative electrode current collector, and the structural layer is directly pressed onto the negative-electrode substrate layer, or is directly pressed onto the negative-electrode substrate layer with the use of a separator.

In a specific embodiment, the structural layer is embedded in the negative-electrode substrate layer in a discontinuous manner to form an integrated structure. For example, when preparing the negative-electrode substrate layer, the nanoparticles or microparticles of the structural layer are incorporated to form an integrated structure of the structural layer and the negative-electrode substrate layer, and then the integrated structure is laminated onto a current collector.

In a specific embodiment, the structural layer is provided between a negative-electrode substrate layer and a separator. For example, the structural layer (for example, layered particles) is provided on the separator, and then the negative-electrode substrate layer is pressed onto the structural layer provided on the separator. Alternatively, the structural layer is provided over or under the negative-electrode substrate layer, and the structural layer is directly pressed onto the negative-electrode substrate layer with the use of the separator.

In a specific embodiment, the structural layer is provided between a positive electrode plate and a separator, and the structural layer abuts against the separator to be at least partially embedded in the negative-electrode substrate layer. For example, the structural layer (for example, layered particles) is provided on the surface of the separator at a side facing the positive electrode plate, and then the negative-electrode substrate layer is pressed onto the separator so that the separator abuts against the positive electrode plate, whereby the structural layer abuts against the separator to be at least partially embedded in the negative-electrode substrate layer. Alternatively, the structural layer (for example, layered particles) is provided on the surface of the separator at a side facing the positive electrode plate, and the structural layer is then pressed onto the separator so that the separator abuts against the negative-electrode substrate layer, whereby the structural layer abuts against the separator to be at least partially embedded in the negative-electrode substrate layer.

In a specific embodiment, the structural layer is embedded in the separator in a discontinuous manner to form an integrated structure. For example, when preparing the separator layer, the nanoparticles or microparticles of the structural layer are incorporated to form an integrated structure of the structural layer and the separator, and then the integrated structure is laminated onto the negative-electrode substrate layer (optionally supported by a current collector).

In some embodiments, after the negative-electrode substrate layer is pressed onto the structural layer, particles located under the negative-electrode substrate layer can penetrate the negative-electrode substrate layer to form island structures protruding from the negative-electrode substrate layer, thereby increasing the specific surface area of the negative-electrode substrate layer. Preferably, the particles do not react with the electrolyte.

In some other embodiments, after the negative-electrode substrate layer is pressed onto the structural layer, particles located under the negative-electrode substrate layer do not penetrate the negative-electrode substrate layer, but enable formation of convex structures on the upper layer of the negative-electrode substrate layer, thereby increasing the specific surface area of the negative-electrode substrate layer.

In some other embodiments, after the negative-electrode substrate layer is pressed onto the structural layer, particles located over the negative-electrode substrate layer can be pressed into the negative-electrode substrate layer, and enable formation of concave structures on the upper layer of the negative-electrode substrate layer, thereby increasing the specific surface area of the negative-electrode substrate layer.

In some embodiments, the thickness of the negative-electrode enhancement film is 0.01 µm-100 µm, 0.1 µm-50 µm, 1 µm-10 µm, or any numerical range consisting of the various end values of the above ranges. In an optional embodiment of the present application, the thickness of the negative-electrode enhancement film is 0.1 µm-10 µm. When the thickness of the negative-electrode enhancement film is within the above numerical range, the specific surface area of the negative electrode is increased significantly; the energy density of the battery is high; the kinetic characteristics of the battery are ideal; the growth of dendrites is inhibited; the probability of short circuit between the positive and negative electrodes is small; and the manufacturing cost of the battery is low.

In some embodiments, the areal density of the negative-electrode enhancement film is 0.01mg/cm²-100mg/cm², 0.1mg/cm²-50mg/cm², 1mg/cm²-30mg/cm², 5mg/cm²-20mg/cm², or any numerical range consisting of the various end values of the above ranges. In an optional embodiment of the present application, the areal density of the negative-electrode enhancement film is between 0.1 mg/cm²-1 mg/cm². When the areal density of the negative-electrode enhancement film is within the above numerical range, the battery has a higher energy density; the growth of dendrites is inhibited; the specific surface area of the negative electrode is increased significantly; the manufacturing cost of the battery is low; the probability of short circuit between the positive and negative electrodes is small; and the dynamic characteristics of the battery are ideal.

In some embodiments, the secondary battery of the present disclosure includes a positive electrode plate, a negative electrode plate having a negative-electrode substrate layer, a separator provided between the positive electrode plate and the negative electrode plate, an electrolyte, and a negative-electrode enhancement film.

In some embodiments, the electrolyte comprises a metal element acting as an active species, wherein the metal acting as an active species is different from the at least one metal element in the negative-electrode substrate layer, and the redox reaction potential of the metal element of the active species is lower than that of the at least one metal element in the negative-electrode substrate layer.

**In** some embodiments, the active material of the positive electrode plate does not undergo a reversible electrochemical reaction with the at least one metal element in the negative-electrode substrate layer or preferentially undergoes a reversible electrochemical reaction with the metal element acting as an active species; preferably, the active material of the positive electrode plate is of a polyanion salt type, a metal oxide type, or a compounding type.

In some embodiments, the at least one metal element in the negative-electrode substrate layer is at least one of sodium, potassium, magnesium and calcium, and the metal element acting as an active species is at least one of lithium, sodium, potassium, magnesium and calcium.

**In** some embodiments, the structural layer further comprises a lithium-containing compound, which can serve as a supplementary source of lithium ions in the secondary battery to increase the service life of the secondary battery.

In some embodiments, the active material of the positive electrode plate does not undergo a reversible electrochemical reaction with the at least one metal element in the negative-electrode substrate layer or preferentially undergoes a reversible electrochemical reaction with the metal element acting as an active species; preferably, the active material of the positive electrode plate is of a polyanion salt type, a metal oxide type, or a compounding type.

In some embodiments, the electrolyte comprises a metal element acting as an active species, wherein the metal element is different from the ions of the at least one metal element in the negative-electrode substrate layer. In some embodiments, the electrolyte comprises at least one anion selected from fluorine-containing anions; preferably, at least one selected from bis(fluorosulfonyl)imide anion, hexafluorophosphate, bis(trifluoromethanesulfonyl)imide anion, difluorooxalatoborate, tetrafluoroborate, hexafluoroarsenate and difluorophosphate. In some embodiments, the solvent of the electrolyte is selected from at least one of ether compounds, acetal compounds, and ketal compounds. When the solvent and anion of the electrolyte are chosen from the above scopes, the reactivity of the electrolyte with the negative-electrode substrate layer is low; the consumption rate of the active species is low; the electrolyte enables formation of a negative electrode protection film (SEI) with strong ion conductivity on the surface of the negative-electrode substrate layer; the negative-electrode substrate layer participates in the formation and/or regeneration of the negative electrode protection film; the structural stability of the negative electrode is high; the kinetic characteristics of the battery are ideal; and the cycle life of the battery is long.

In some embodiments, the solvent used for the electrolyte has low reactivity with metallic sodium or sodium alloys. In a preferred embodiment, the solvent is an ether solvent. More preferably, the solvent is at least one of ethylene glycol dimethyl ether, diethylene glycol dimethyl ether, triethylene glycol dimethyl ether, tetraethylene glycol dimethyl ether, polyethylene glycol dimethyl ether, ethylene glycol methyl ethyl ether, ethylene glycol diethyl ether, diethylene glycol methyl ethyl ether, diethylene glycol diethyl ether, triethylene glycol methyl ethyl ether, triethylene glycol diethyl ether, tetraethylene glycol methyl ethyl ether, tetraethylene glycol diethyl ether, ethylene glycol methyl propyl ether, ethylene glycol ethyl propyl ether, ethylene glycol dipropyl ether, diethylene glycol methyl propyl ether, diethylene glycol ethyl propyl ether, diethylene glycol dipropyl ether, triethylene glycol methyl propyl ether, triethylene glycol ethyl propyl ether, triethylene glycol dipropyl ether, tetraethylene glycol methyl propyl ether, tetraethylene glycol ethyl propyl ether, tetraethylene glycol dipropyl ether, ethylene glycol methyl butyl ether, ethylene glycol ethyl butyl ether, ethylene glycol propyl butyl ether, ethylene glycol dibutyl ether, diethylene glycol methyl butyl ether, diethylene glycol ethyl butyl ether, diethylene glycol propyl butyl ether, diethylene glycol dibutyl ether, triethylene glycol methyl butyl ether, triethylene glycol ethyl butyl ether, triethylene glycol propyl butyl ether, triethylene glycol dibutyl ether, tetraethylene glycol methyl butyl ether, tetraethylene glycol ethyl butyl ether, tetraethylene glycol propyl butyl ether, and tetraethylene glycol dibutyl ether. When the solvent of the electrolyte is selected from the above scope, the reactivity of the solvent of the electrolyte with the negative-electrode substrate layer is low, which is conducive to maintaining the structural stability of the negative-electrode substrate layer, improving the ion conductivity and stability of the negative electrode protection film (SEI), optimizing the kinetic characteristics of the battery, reducing the probability of dendrite formation, and increasing the service life and rate capability of the battery.

In some embodiments, the concentration of the electrolyte is 0.5 mol/L-7 mol/L, 1 mol/L-5 mol/L, 2 mol/L-4 mol/L, or any numerical range consisting of the various end values of the above ranges. In some embodiments of the present application, the electrolyte further comprises an additive, including but not limited to: 1,3-dioxolane, 1,4-dioxane, 1,3,5-trioxane, lithium nitrate, lithium fluorosulfonate, sulfur dioxide, fluoroethylene carbonate, 12-crown-4, 15-crown-5 and 18-crown-6. In some embodiments, the additive is present in an amount of 0.1% to 20%, 1% to 15%, or 5% to 10% by mass in the electrolyte. When the concentration of the electrolyte is within the above range, the electrolyte has high ion conductivity, good film formability and good kinetic characteristics, and enables formation of a negative electrode protection film (SEI) with good ion conductivity on the negative electrode, thereby effectively inhibiting formation of metal dendrites and reducing consumption of the active species and the electrolyte. In addition, the electrolyte has good manipulability and high wettability for the electrode.

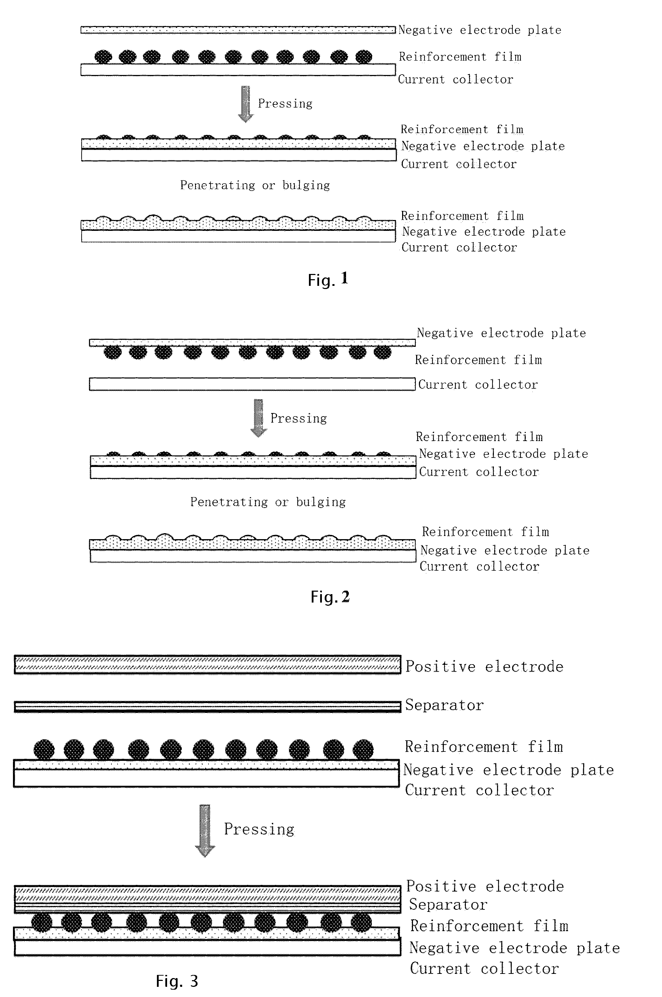

As shown by FIG. 1, the structural layer of the reinforcement film is provided over the current collector, and then the negative-electrode substrate layer (negative electrode plate) is provided on the reinforcement film by cold pressing or hot pressing. The particles located under the negative-electrode substrate layer may press through the negative-electrode substrate layer to form island structures protruding from the negative-electrode substrate layer. Alternatively, the particles located under the negative-electrode substrate layer do not penetrate the negative-electrode substrate layer, but form bulging structures on the upper layer of the negative-electrode substrate layer.

As shown by FIG. 2, the structural layer of the reinforcement film is provided under the negative-electrode substrate layer, and then the negative-electrode substrate layer provided with the structural layer is provided on the current collector by cold pressing or hot pressing. Likewise, the particles located under the negative-electrode substrate layer may press through the negative-electrode substrate layer to form island structures protruding from the negative-electrode substrate layer. Alternatively, the particles located under the negative-electrode substrate layer do not penetrate the negative-electrode substrate layer, but form bulging structures on the upper layer of the negative-electrode substrate layer.

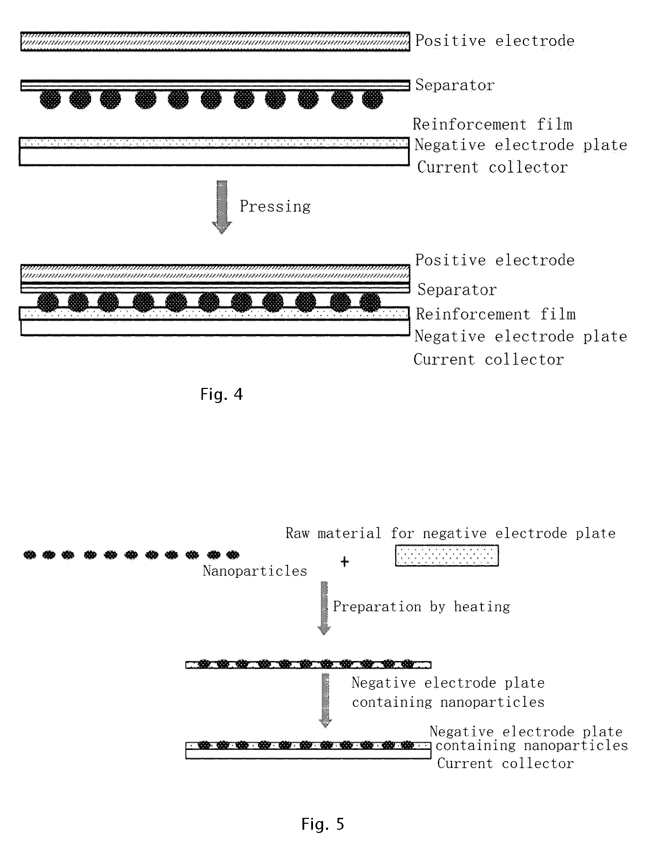

As shown by FIG. 3, the structural layer of the reinforcement film is provided over the negative-electrode substrate layer, and then the separator (optionally together with the positive electrode plate) is pressed onto the negative-electrode substrate layer provided with the structural layer by cold pressing or hot pressing, so that the particles over the negative-electrode substrate layer are at least partially pressed/embedded into the negative-electrode substrate layer, and concave structures are formed in the upper layer of the negative-electrode substrate layer.

As shown by FIG. 4, the structural layer of the reinforcement film is provided under the separator, and then the separator provided with the structural layer (optionally together with the positive electrode plate) is pressed onto the negative-electrode substrate layer by cold pressing or hot pressing, so that the particles under the separator are at least partially pressed/embedded into the negative-electrode substrate layer, and concave structures are formed in the upper layer of the negative-electrode substrate layer.

As shown by FIG. 5, the particles of the reinforcement film are blended into the raw material of the negative-electrode substrate layer, and pressed in a molten state to form a negative-electrode substrate layer having particles and an integrated structure, wherein the particles of the reinforcement film form island structures in the negative-electrode substrate layer. Thereafter, the negative-electrode substrate layer is laminated onto the current collector.

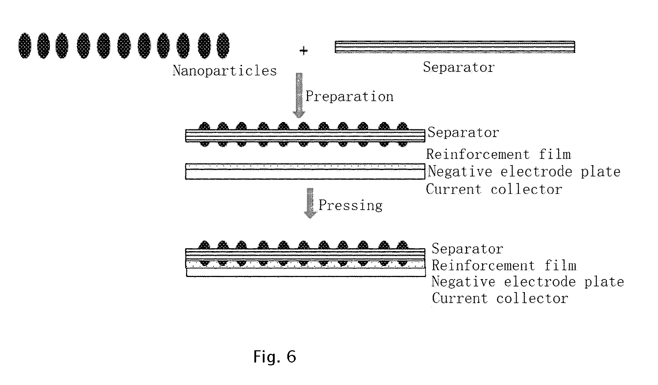

As shown by FIG. 6, the particles of the reinforcement film are blended into the raw material of the separator to form a separator having particles and an integrated structure, wherein the particles of the reinforcement film form convexes on the surface of the separator. Thereafter, the separator is laminated onto the negative-electrode substrate layer, and concave structures are formed in the upper layer of the negative-electrode substrate layer.

In the present application, the negative-electrode enhancement film increases the specific surface area of the negative-electrode substrate layer. In some embodiments of the present application, the negative-electrode enhancement film is a material that does not chemically react with the electrolyte. Preferably, the negative-electrode enhancement film may further be a material that does not chemically react with the electrolyte, active species, metal layer and/or alloy layer. The negative-electrode enhancement film comprises a component selected from at least one of an elemental non-metal, an oxide (for example, aluminum oxide, Li₇La₃Zr₂O₁₂), a fluoride (for example, lithium fluoride, sodium fluoride), a carbide (for example, tungsten carbide), a carbon material (for example, carbon nanotubes), a nitride (for example, silicon nitride) and a silicide (for example, titanium silicide), and is at least partially embedded in the inactive metal or alloy layer. Preferably, the component of the negative-electrode enhancement film is sodium fluoride, lithium fluoride, aluminum oxide, boron nitride, carbon nanotubes, carbon black or a combination thereof. When the structural layer is selected from the above scope, the consumption rate of the active species in the battery is low, and the structure of the negative-electrode enhancement film is stable, which is conducive to continuously maintaining the high specific surface area of the negative-electrode substrate layer, reducing the current density of the negative electrode, reducing the probability of short circuit between the positive and negative electrodes of the battery, and increasing the service life of the battery.

### Secondary Battery

The secondary battery of the present application includes a positive electrode (electrode plate), a negative electrode (electrode plate), a separator, an electrolyte, etc. During the charge/discharge process of the battery, active metal cations are intercalated and deintercalated back and forth between the positive and negative electrodes. The electrolyte conducts ions between the positive and negative electrodes.

### [Positive electrode plate]

In the secondary battery of the present application, the positive electrode plate includes a positive electrode current collector, and a positive electrode film layer (or named a positive electrode active material layer) provided on at least one surface of the positive electrode current collector and including a positive electrode active material. For example, the positive electrode current collector has two opposite surfaces in its thickness direction, and the positive electrode film layer is provided on either or both of the two opposite surfaces of the positive electrode current collector. In the secondary battery of the present application, the positive electrode current collector may be a metal foil or a composite current collector. For example, the metal foil may be an aluminum foil, and the composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy, etc.) on a polymer material substrate (such as polypropylene PP, polyethylene terephthalate PET, polybutylene terephthalate PBT, polystyrene PS, polyethylene PE or a copolymer thereof, etc.).

In the secondary battery of the present application, the positive electrode active material (species) may be one that is known in the art for secondary batteries. For example, the positive electrode active material may include one or more of the following: phosphates of an olivine structure, transition metal oxides, and modified compounds thereof. However, the present application is not limited to these materials, and other conventional materials that can be used as positive electrode active materials for secondary batteries may also be used. These positive electrode active materials may be used alone or in combination of two or more, including but not limited to layered oxides containing the same metal element ions as at least one metal element in the negative-electrode substrate layer, polyanionic materials or Prussian blue materials.

In some embodiments, the positive electrode film layer may further optionally include a binder. Non-limiting examples of the binder that may be used for the positive electrode film layer may include one or more of the following: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resins. In an embodiment of the present application, the first positive electrode active material layer and/or the second positive electrode active material layer each independently includes a binder selected from polyvinylidene fluoride, polyacrylic acid, polytetrafluoroethylene, polyimide, and a combination thereof.

In some embodiments, the positive electrode film layer may optionally further include a conductive agent. Examples of the conductive agent used for the positive electrode film layer may include one or more of superconducting carbon, acetylene black, carbon black, Ketjen black, carbon dots, carbon nanotubes, graphene, and carbon nanofibers. In an embodiment of the present application, the first positive electrode active material layer and/or the second positive electrode active material layer independently comprises a conductive agent such as graphite, carbon black, acetylene black, graphene, carbon nanotubes, or a combination thereof.

In one embodiment of the present application, the positive electrode may be prepared in the following manner: the above-mentioned components for preparing the positive electrode, such as the positive electrode active material, the conductive agent, the binder and any other components, are dispersed in a solvent (such as N-methylpyrrolidone) to form a uniform positive electrode slurry; the positive electrode slurry is coated on a positive electrode current collector. After drying, cold pressing and other processes, the positive electrode plate can be obtained.

### [Negative electrode plate]

In the secondary battery of the present application, the negative electrode plate does not exclude any other additional functional layer in addition to the negative-electrode substrate layer. For example, in certain embodiments, the negative electrode plate of the present application may further include a conductive primer layer (for example, one consisting of a conductive agent and a binder) sandwiched between the negative electrode current collector and the negative-electrode substrate layer and provided on the surface of the negative electrode current collector. In some other embodiments, the negative electrode plate of the present application may further include a cover protection layer covering the surface of the second negative electrode film layer.

In the secondary battery of the present application, the negative electrode current collector may be a metal foil or a composite current collector. For example, the metal foil may be a copper foil, a silver foil, an iron foil, or a foil made of an alloy of the above metals. The composite current collector may include a polymer material base layer and a metal layer formed on at least one surface of the polymer material base layer. It may be formed by forming a metal material (copper, copper alloy, nickel, nickel alloy, titanium, titanium alloy, silver and silver alloy, etc.) on a polymer material base layer (such as a base layer made of a material such as polypropylene PP, polyethylene terephthalate PET, polybutylene terephthalate PBT, polystyrene PS, polyethylene PE or a copolymer thereof).

### [Electrolyte]

The electrolyte conducts ions between the positive and negative electrodes. The electrolyte may be selected from at least one of a solid electrolyte, a semi-solid electrolyte and a liquid electrolyte. In some embodiments, the electrolyte used is an electrolyte. In one embodiment of the present application, the electrolyte may optionally further include an additive. For example, the additive may include one or more of the following: negative electrode film-forming additives, and positive electrode film-forming additives. It may also include an additive that can improve certain battery properties, such as an additive that improves the overcharge performance of a battery, an additive that improves the high temperature performance of a battery, an additive that improves the low temperature performance of a battery, etc.

### [Separator]

In one embodiment of the present application, the secondary battery further includes a separator, which separates the anode side of the secondary battery from the cathode side, and provides selective permeability or blocking for substances of different types, sizes and charges in the system. For example, the separator may insulate electrons, and physically isolate the positive electrode from the negative electrode of the secondary battery, so as to prevent internal short circuit and form an electric field in a certain direction, while allowing ions in the battery to pass through the separator and move between the positive and negative electrodes. In one embodiment of the present application, the material used to prepare the separator may include one or more of glass fiber, non-woven fabric, polyethylene, polypropylene and polyvinylidene fluoride. The separator may be a monolayer film or a multilayer composite film. When the separator is a multilayer composite film, the materials of the layers may be the same or different. In an embodiment of the present application, the separator is selected from a polyolefin separator, a polyester separator, a polyimide separator, a polyamide separator and a cellulose separator.

In one embodiment of the present application, the positive electrode plate, the negative electrode plate and the separator may be made into an electrode assembly/bare cell by a winding process or a lamination process.

In one embodiment of the present application, the secondary battery may include an outer package, which may be used to encapsulate the electrode assembly and the electrolyte. In some embodiments, the outer package of the secondary battery may be a hard shell, such as a hard plastic shell, an aluminum shell, a steel shell, or the like. In some other embodiments, the outer package of the secondary battery may be a soft package, such as a pouch-type soft package. The material of the soft package may be plastic, such as one or more of polypropylene (PP), polybutylene terephthalate (PBT), polybutylene succinate (PBS), etc.

The shape of the secondary battery of the present application may be cylindrical, square or any other shape. The outer package may include a shell and a cover plate. The shell may include a bottom plate and side plates connected to the bottom plate. The bottom plate and the side plates are enclosed to form a receiving cavity. The shell has an opening in communication with the receiving cavity, and the cover plate may be provided to cover the opening, so as to close the receiving cavity. The positive electrode plate, the negative electrode plate and the separator may be formed into an electrode assembly by a winding process or a lamination process. The electrode assembly is encapsulated in the receiving cavity, and the electrode assembly is immersed in the electrolyte. The secondary battery may include one or more electrode assemblies.

In one embodiment of the present application, several secondary batteries may be assembled together to form a battery module. The battery module includes two or more secondary batteries, and the specific number of the secondary batteries depends on the application of the battery module and the parameters of an individual battery module.

In the battery module, a plurality of secondary batteries may be provided in sequence along the length direction of the battery module. Of course, they may also be arranged in any other manner. The plurality of secondary batteries may be further fixed with fasteners. Optionally, the battery module may further include a housing having an accommodation space, and the plurality of secondary batteries are accommodated in the accommodation space.

In one embodiment of the present application, two or more of the above-mentioned battery modules may be assembled into a battery pack, and the number of the battery modules contained in the battery pack depends on the application of the battery pack and the parameters of an individual battery module. The battery pack may include a battery box and a plurality of battery modules provided in the battery box. The battery box includes an upper box body and a lower box body. The upper box body can cover the lower box body and fit well with it to form a closed space for accommodating the battery modules. Two or more battery modules may be arranged in the battery box in a desired manner.

In one embodiment of the present application, an exemplary battery pack may include a battery box and a plurality of battery modules provided in the battery box. The battery box includes an upper box body and a lower box body. The upper box body is used to cover the lower box body and form a closed space for accommodating the battery modules. A plurality of battery modules may be arranged in the battery box in any manner.

### Electric apparatus

In one embodiment of the present application, the electric apparatus of the present application includes at least one of the secondary battery, battery module, or battery pack of the present application. The secondary battery, battery module, or battery pack may be used as a power source for the electric apparatus or as an energy storage unit for the electric apparatus. The electric apparatus includes but is not limited to a mobile digital device (such as a mobile phone, a laptop, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, or the like.

As another example, the apparatus may be a mobile phone, a tablet computer, a laptop computer, or the like. The apparatus is usually required to be lightweight and thin, and allows for the use of a secondary battery as a power source.

In the following, the influence of the secondary battery manufactured according to the embodiments of the present application on the performances of the electrochemical device is characterized based on specific Examples. However, it should be pointed out particularly that the protection scope of the present application is defined by the claims, not limited to the above specific embodiments.

### Examples

Unless otherwise specified, all raw materials used in the present disclosure were analytically pure and all water used was deionized water.

### 1. Preparation of positive electrode plate

10 wt% of polyvinylidene fluoride was dissolved in N-methylpyrrolidone as a binder, and 80 wt% of a polyanion salt-type positive electrode active material containing element B (see Tables 1-6 for details) and 10 wt% of conductive carbon black were added to prepare a uniformly dispersed positive electrode slurry. The positive electrode slurry was evenly coated on the surface of an aluminum foil current collector and transferred to a vacuum oven for full drying. The resulting positive electrode plate was rolled and punched to obtain a target positive electrode disc.

### 2. Preparation of negative electrode plate

In an Ar atmosphere, as shown in Tables 1-6 below, the metal constituting the negative electrode base material, or the metal constituting the negative electrode base material and another alloy component powder were placed in a stainless steel crucible, heated until completely melted, fully stirred, and then cooled to obtain a negative-electrode substrate layer material.

The negative-electrode substrate layer material was compounded on the surface of a copper foil by cold pressing or hot pressing to obtain a negative-electrode substrate layer having a layered structure. Alternatively, the negative-electrode substrate layer material was compounded on the surface of the copper foil by atomization spraying or sputtering to obtain a negative-electrode substrate layer having a particle structure. Alternatively, the negative-electrode substrate layer material was compounded on the surface of the copper foil by extrusion to obtain a negative-electrode substrate layer having a strip structure. Alternatively, the negative-electrode substrate layer material was compounded on the surface of the copper foil by atomization spraying or sputtering to obtain a negative-electrode substrate layer having a three-dimensional structure.

The negative-electrode enhancement film material was compounded on the surface of the negative-electrode substrate layer by cold pressing or hot pressing to obtain a negative electrode plate.

### 3. Preparation of separator

A porous polymer film of polypropylene was used as a separator.

### 4. Preparation of electrolyte

Under an Ar atmosphere, a fully dried fluorine-containing salt (see Table 6 for details, hexafluorophosphate, hexafluoroarsenate, tetrafluoroborate) or a non-fluorine-containing salt (nitrate) was dissolved in an organic solvent of ethylene glycol dipropyl ether and stirred thoroughly to prepare an electrolyte.

### 5. Preparation of button battery

The positive electrode plate, separator, and negative electrode plate were stacked in order, with the separator placed between the positive and negative electrode plates to play a separation role, and the electrolyte was added to finish the assembly of a button battery.

The negative electrode plates used in Examples 1-26 and Comparative Examples 1-9 were prepared according to the above preparation method, wherein the specific parameters of the negative electrode plate formulae are shown in Tables 1-6.

As it can be seen from the test results of Example (Ex.) 1 to Example (Ex.) 4 and Comparative Example (Cm. Ex.) 1 to Comparative Example (Cm. Ex.)2 in Table 1, when the component of the negative-electrode enhancement film is a species that does not react with the active material and/or the electrolyte and/or the negative-electrode substrate layer, the consumption rate of the active species in the battery is low, and the negative-electrode enhancement film has a stable structure, thereby increasing the specific surface area of the negative-electrode substrate layer, stabilizing the surface state of the negative-electrode substrate layer, reducing the actual current density of the negative electrode, and improving the cycle performance of the battery. As it can be seen from the test results of Comparative Example 1, the negative-electrode enhancement film can increase the specific surface area of the negative electrode, reduce the current density of the negative electrode and the thickness of the SEI, and improve the cycle performance of the battery. As it can be seen from the test results of Comparative Example 2, when the component of the negative-electrode enhancement film can react with the active material, and/or the electrolyte, and/or the negative-electrode substrate layer, the consumption rate of the active species in the battery is high, and the structure of the negative-electrode enhancement film is unstable, which leads to the structural instability of the negative-electrode substrate layer, and deteriorates the cycle performance and first-cycle coulombic efficiency of the battery.

**Table 1**

| First-cycle efficiency | Cycle number | Sample | Negative-electrode enhancement film material | Negative-electrode substrate layer material | Active species | Areal density of negative- electrode substrate layer (mg/cm²) | Electrolyte concentration (mol/L) | Structural form of negative- electrode substrate layer |
|---|---|---|---|---|---|---|---|---|
| 93% | 602 | Ex. 1 | Lithium fluoride | Na | Li | 5 | 2 | Layered |
| 93% | 605 | Ex. 2 | Lithium fluoride | Na | Li | 5 | 2 | Layered |
| 87% | 524 | Ex. 3 | Carbon nanotube | Mg | K | 5 | 2 | Layered |
| 89% | 531 | Ex. 4 | Conducive carbon black | Mg | K | 5 | 2 | Layered |
| 94% | 591 | Cm. Ex. 1 | None | Na | Li | 5 | 2 | Layered |
| 67% | 53 | Cm. Ex. 2 | Aluminum powder | Na | Li | 5 | 2 | Layered |

As it can be seen from the test results of Examples 5 to 8 and Comparative Example 3 in Table 2, when the thickness of the negative-electrode enhancement film is in the range of 0.01 µm to 100 µm, the battery has a higher energy density. The negative-electrode enhancement film can effectively increase the specific surface area of the negative electrode, reduce the current density of the negative electrode, prevent excessive formation of SEI, and further optimize the cycle performance of the battery. As it can be seen from the test results of Comparative Example 3, when the thickness of the negative-electrode enhancement film is too large, the energy density of the battery is low; the impedance of the battery is high; the kinetic characteristics of ion transmission on the negative electrode surface are poor; it's easy to form metal dendrites; and the first cycle coulombic efficiency and cycle performance of the battery are degraded.

**Table 2**

| First-cycle efficiency | Cycle number | Sample | Negative-electrode enhancement film material | Negative-electrode substrate layer material | Active species | Negative-electrode enhancement film thickness | Electrolyte concentration (mol/L) | Areal density of negative-electrode substrate layer (mg/cm²) |
|---|---|---|---|---|---|---|---|---|
| 91% | 577 | Ex. 5 | Sodium fluoride | Mg | Ca | 0.01 | 2 | 5 |
| 93% | 605 | Ex. 6 | Sodium fluoride | Na | Li | 5 | 2 | 5 |
| 93% | 596 | Ex. 7 | Sodium fluoride | Mg | Ca | 10 | 2 | 5 |
| 89% | 515 | Ex. 8 | Sodium fluoride | Na | Li | 100 | 2 | 5 |
| 88% | 482 | Cm. Ex. 3 | Sodium fluoride | Na | Li | 150 | 2 | 5 |

As it can be seen from the test results of Examples 9 to 13 and Comparative Example 4 in Table 3, when the areal density of the negative-electrode enhancement film is in the range of 0.01 mg/cm² to 30 mg/cm², the battery has a relatively high energy density. The negative-electrode enhancement film can effectively increase the specific surface area of the negative electrode, reduce the current density of the negative electrode, prevent excessive formation of SEI, and further optimize the cycle performance of the battery. As it can be seen from the test results of Comparative Example 4, when the areal density of the negative-electrode enhancement film is too high, the energy density of the battery is low; the impedance of the battery is large; the kinetic characteristics of ion transmission on the negative electrode surface are poor; it's easy to form metal dendrites; and the first cycle coulombic efficiency and cycle performance of the battery are degraded.

**Table 3**

| First-cycle efficiency | Cycle number | Sample | Negative-electrode enhancement film material | Negative-electrode substrate layer material | Active species | Areal density of negative-electrode enhancement film (mg/cm²) | Electrolyte concentration (mol/L) | Areal density of negative-electrode substrate layer (mg/cm²) |
|---|---|---|---|---|---|---|---|---|
| 91% | 565 | Ex. 9 | Aluminum oxide | Mg | Na | 0.01 | 2 | 5 |
| 93% | 599 | Ex. 10 | Aluminum oxide | Na | Li | 5 | 2 | 5 |
| 92% | 563 | Ex. 11 | Aluminum oxide | Mg | Na | 10 | 2 | 5 |
| 90% | 541 | Ex. 12 | Aluminum oxide | Na | Li | 20 | 2 | 5 |
| 89% | 502 | Ex. 13 | Aluminum oxide | Mg | Na | 30 | 2 | 5 |
| 88% | 480 | Cm. Ex. 4 | Aluminum oxide | Na | Li | 50 | 2 | 5 |

As it can be seen from the test results of Examples 14 to 18 and Comparative Examples 5 to 6 in Table 4, when the particle size of the negative-electrode enhancement film is in the range of 0.005 µm to 50 µm, the negative-electrode enhancement film can effectively increase the specific surface area of the negative electrode, reduce the current density of the negative electrode during the charge/discharge process of the battery, reduce the SEI thickness, prevent SEI from excessively passivating the negative electrode, and increase the cycle life of the battery. As it can be seen from the test results of Comparative Example 5, when the particle size of the negative-electrode enhancement film is too small, the structure of the negative-electrode enhancement film is too dense, so that the resistance to ion passage is large, the impedance of the battery is large, and it's easy for ions to deposit directly on the surface to form dendrites, which degrades the first cycle coulombic efficiency and cycle performance of the battery. As it can be seen from the test results of Comparative Example 6, when the particle size of the negative-electrode enhancement film is too large, it is difficult for the negative-electrode enhancement film to effectively increase the specific surface area of the negative electrode, and the electrochemical performance of the battery is difficult to improve. In addition, larger particles of the negative-electrode enhancement film can easily lead to puncture of the separator and short circuit of the battery, thereby degrading the cycle performance of the battery and increasing the risk of the battery during use.

**Table 4**

| First-cycle efficiency | Cycle number | Sample | Negative-electrode enhancement film material | Negative-electrode substrate layer material | Active species | Particle size of negative-electrode enhancement film (µm) | Electrolyte concentration (mol/L) | Areal density of negative-electrode substrate layer (mg/cm²) |
|---|---|---|---|---|---|---|---|---|
| 89% | 516 | Ex. 14 | Silicon nitride | Na | Li | 0.005 | 2 | 5 |
| 93% | 595 | Ex. 15 | Silicon nitride | Mg | Ca | 5 | 2 | 5 |
| 93% | 597 | Ex. 16 | Silicon nitride | Na | Li | 10 | 2 | 5 |
| 92% | 583 | Ex. 17 | Silicon nitride | Mg | Ca | 20 | 2 | 5 |
| 92% | 585 | Ex. 18 | Silicon nitride | Na | Li | 50 | 2 | 5 |
| 88% | 475 | Cm. Ex. 5 | Silicon nitride | Mg | Ca | 0.003 | 2 | 5 |
| 87% | 450 | Cm. Ex. 6 | Silicon nitride | Na | Li | 100 | 2 | 5 |

As it can be seen from the test results of Examples 19 to 21 and Comparative Example 7 in Table 5, when the electrolyte contains at least one anion that is a fluorine-containing anion, the main component of the negative electrode protection film (SEI) is metal fluoride. As a result, the secondary battery has good cycle performance; the resistance to the transmission of the active species ions in the negative electrode protection film is small; and the negative electrode protection film can effectively block the side reaction between the negative-electrode substrate layer and the electrolyte, thereby reducing the consumption of the active species in the battery. As it can be seen from the test results of Comparative Example 7, when the main component of the negative electrode protection film is not metal fluoride, the resistance to the passage of the active species ions through the negative electrode protection film is large, and the side reaction between the negative-electrode substrate layer and the electrolyte is intensified, resulting in the formation of metal dendrites and the consumption of active species, thereby deteriorating the cycle performance of the battery.

**Table 5**

| First-cycle efficiency | Cycle number | Sample | Negative-electrode enhancement film material | Negative-electrode substrate layer material | Active species | Anion in electrolyte | Electrolyte concentration (mol/L) | Areal density of negative-electrode substrate layer (mg/cm²) |
|---|---|---|---|---|---|---|---|---|
| 93% | 605 | Ex. 19 | Sodium fluoride | Na | Li | Hexafluorophosphate | 2 | 5 |
| 92% | 553 | Ex. 20 | Sodium fluoride | Na | Li | Tetrafluoroborate | 2 | 5 |
| 92% | 567 | Ex. 21 | Sodium fluoride | Na | Li | Hexafluoroarsenate | 2 | 5 |
| 82% | 379 | Cm. Ex. 7 | Sodium fluoride | Na | Li | Nitrate | 2 | 5 |

As it can be seen from the test results of Examples 22 to 26 and Comparative Examples 8 to 9 in Table 6, when the areal density of the negative-electrode substrate layer is in the range of 0.2 mg/cm²-50 mg/cm², the secondary battery has a high energy density and good cycle performance, and the negative-electrode substrate layer can effectively inhibit the formation of lithium dendrites. As it can be seen from the test results of Comparative Example 8, when the areal density of the negative-electrode substrate layer is too low, it is difficult for the negative-electrode substrate layer to effectively inhibit the formation of metal dendrites, and the cycle performance of the battery deteriorates. As it can be seen from the test results of Comparative Example 9, when the areal density of the negative-electrode substrate layer is too high, the energy density of the battery is low. In addition, the diffusion distance and diffusion resistance of the active species dissolved in the negative-electrode substrate layer increase, so that it is difficult to fully participate in the battery cycle process, thereby deteriorating the cycle performance of the battery.

**Table 6**

| First-cycle efficiency | Cycle number | Sample | Negative-electrode enhancement film material | Negative-electrode substrate layer thickness (µm) | Areal density of negative-electrode substrate layer (mg/cm²) | Electrolyte concentration (mol/L) | Structural form of negative-electrode substrate layer |
|---|---|---|---|---|---|---|---|
| 89% | 510 | Ex. 22 | Sodium fluoride | 2 | 0.2 | 2 | Layered |
| 90% | 547 | Ex. 23 | Calcium fluoride | 10 | 1 | 2 | Layered |
| 93% | 605 | Ex. 24 | Sodium fluoride | 50 | 5 | 2 | Layered |
| 91% | 573 | Ex. 25 | Calcium fluoride | 100 | 10 | 2 | Layered |
| 87% | 452 | Ex. 26 | Sodium fluoride | 500 | 50 | 2 | Layered |
| 71% | 82 | Cm. Ex. 8 | Calcium fluoride | 0.5 | 0.05 | 2 | Layered |
| 84% | 379 | Cm. Ex. 9 | Sodium fluoride | 600 | 60 | 2 | Layered |

### Test Methods

### 1. Specific surface area S_{negative}

According to the national standard "GB/T 19587-2004 Determination of the specific surface area of solids by gas adsorption using the BET method", the test was carried out using an adsorption characterization analyzer. A powder sample to be tested was placed in a U-shaped sample tube, and a mixed gas containing a certain proportion of an adsorbate was passed through the sample. The amount of the adsorbate molecules (N₂) adsorbed by the sample to be tested was determined based on the change in the gas concentration before and after adsorption, thereby obtaining the specific surface area S_{negative}.

### 2. Median particle size D_{50negative}

The median particle size D_{50negative}is the median particle size of the metal or alloy particles constituting the negative-electrode substrate layer, and the unit is µm. D_{50negative} is the particle size corresponding to the cumulative volume percentage of the metal or alloy particles reaching 50%. The test was carried out according to the national standard "GB/T 19077-2016 Particle size analysis -- Laser diffraction methods". After the sample was dispersed by pressure, the particle size of the material was characterized by a laser particle size analyzer. **In** the test results, the median particle size D_{50negative}was used to represent the average particle size.

### 3. Areal density of negative-electrode substrate layer

A square negative-electrode substrate layer having a size of 10 cm*10 cm was weighed to obtain its mass, which was then divided by its area to obtain the areal density.

### 4. Thickness of negative-electrode substrate layer

A square negative electrode plate having a size of 10cm*10cm was placed between two stainless steel sheets each having a size of 10cm*10cm and a well-defined uniform thickness H₁, with the edges and corners aligned. The total thickness H₂ of the two stainless steel sheets plus the negative electrode plate was measured. The thickness H₃ of the negative electrode plate was obtained according to the formula H₃=H₂-2H₁. When the negative electrode plate was coated on both sides, the approximate thickness H₅ of the negative-electrode substrate layer was obtained according to the formula H₅=(H₃-H₄)/2, where H₄ was the thickness of the current collector; when the negative electrode plate was coated on one side, the approximate thickness H₅ of the negative-electrode substrate layer was obtained according to the formula H₅=H₃-H₄, where H₄ was the thickness of the current collector.

### 5. Cycle performance test

At 25°C, the secondary batteries prepared in the Examples and Comparative Examples were subjected to full charge/full discharge cycle tests at a rate of 0.5C. While the cycle test was performed this way, the cycle number was recorded when the battery capacity was less than or equal to 80% of the initial capacity, which was recorded as the nth cycle. The larger n is, the better the cycle performance of the battery. N of greater than 530 cycles indicates excellent cycle capability, n in the range of 500-530 cycles indicates average cycle capability, and n of less than 500 cycles indicates poor cycle capability.

## Claims

1. A negative-electrode enhancement film for a secondary battery, wherein the negative-electrode enhancement film includes at least one structural layer in contact with a negative-electrode substrate layer, wherein the structural layer is at least partially embedded in the negative-electrode substrate layer, and the structural layer increases a specific surface area of the negative-electrode substrate layer.

2. The negative-electrode enhancement film for a secondary battery according to claim 1, wherein the structural layer is a particle layer, wherein the particle layer includes nanoparticles and/or microparticles, and at least a portion of a surface of at least a portion of the nanoparticles and/or microparticles is in contact with the negative-electrode substrate layer.

3. The negative-electrode enhancement film for a secondary battery according to claim 1, wherein the structural layer is a mesh layer, wherein the mesh layer includes nanomeshes and/or micromeshes, and at least a portion of a surface of at least a portion of the nanomeshes and/or micromeshes is in contact with the negative-electrode substrate layer.

4. The negative-electrode enhancement film for a secondary battery according to claim 1, wherein the negative-electrode substrate layer is an inactive layer, including a metal layer and/or an alloy layer selected from sodium, potassium, magnesium and calcium.

5. The negative-electrode enhancement film for a secondary battery according to claim 3, wherein the structural layer does not chemically react with an electrolyte; preferably, the structural layer neither chemically reacts with an electrolyte, nor chemically reacts with an active species, a metal layer, and/or an alloy layer.

6. The negative-electrode enhancement film for a secondary battery according to claim 1, wherein the structural layer includes a component selected from at least one of elemental non-metals, oxides, fluorides, carbides, carbon materials, nitrides, and silicides.

7. The negative-electrode enhancement film for a secondary battery according to claim 1, wherein the structural layer is provided in at least one of the following ways:
(1) The structural layer is provided between the negative-electrode substrate layer and a negative electrode current collector;
(2) The structural layer is provided between the negative-electrode substrate layer and a separator;
(3) The structural layer is provided on one side of the negative-electrode substrate layer away from a negative electrode current collector;
(4) The structural layer is embedded in the negative-electrode substrate layer in a discontinuous manner to form an integrated structure;
(5) The structural layer is provided between a positive electrode plate and a separator, and the structural layer abuts against the separator to be at least partially embedded in the negative-electrode substrate layer;
(6) The structural layer is embedded in a separator in a discontinuous manner to form an integrated structure.

8. The negative-electrode enhancement film for a secondary battery according to claim 1, wherein at least a portion of the structural layer does not penetrate the negative-electrode substrate layer, and forms a convex-concave structure on a surface of the negative-electrode substrate layer.

9. The negative-electrode enhancement film for a secondary battery according to claim 1, wherein the negative-electrode enhancement film includes two structural layers, and the two structural layers are both provided on the same side of the negative-electrode substrate layer or respectively provided on two sides of the negative-electrode substrate layer.

10. The negative-electrode enhancement film for a secondary battery according to claim 10 wherein the two structural layers independently include any one or any combination of nanoparticles, microparticles, nanomeshes, and micromeshes.

11. The negative-electrode enhancement film for a secondary battery according to claim 1, wherein the negative-electrode enhancement film has a thickness of 0.01 µm-100 µm.

12. The negative-electrode enhancement film for a secondary battery according to claim 1, wherein the negative electrode enhancement film has an areal density of 0.01 mg/cm²-30 mg/cm².

13. The negative-electrode enhancement film for a secondary battery according to claim 2, wherein the structural layer includes particles having a median particle size D₅₀ of between 5 nm and 50 µm.

14. A secondary battery, including a positive electrode plate, an electrolyte, a negative electrode plate having a negative-electrode substrate layer, and the negative-electrode enhancement film of any one of claims 1-13.

15. The secondary battery according to claim 14, wherein the electrolyte comprises a metal element acting as an active species, wherein the metal is different from at least one metal element in the negative-electrode substrate layer, and the metal element has a redox reaction potential that is lower than that of the at least one metal element in the negative-electrode substrate layer.

16. The secondary battery according to claim 14, wherein an active material of the positive electrode plate does not undergo a reversible electrochemical reaction with at least one metal element in the negative-electrode substrate layer or preferentially undergoes a reversible electrochemical reaction with a metal element acting as an active species; preferably, the active material of the positive electrode plate is of a polyanion salt type, a metal oxide type and/or a compounding type.

17. The secondary battery according to claim 15, wherein the at least one metal element in the negative-electrode substrate layer is selected from sodium, potassium, magnesium and calcium, and the metal element acting as an active species is at least one of lithium, sodium, potassium, magnesium and calcium.

18. The secondary battery according to claim 17, wherein the metal element is lithium, and the negative-electrode substrate layer is an inactive layer, including sodium metal or sodium alloy.

19. The secondary battery according to claim 18, wherein the structural layer further comprises a lithium compound.

20. The secondary battery according to claim 14, wherein the electrolyte comprises at least one anion selected from fluorine-containing anions; preferably, at least one selected from bis(fluorosulfonyl)imide anion, hexafluorophosphate, bis(trifluoromethanesulfonyl)imide anion, difluorooxalatoborate, tetrafluoroborate, hexafluoroarsenate and difluorophosphate.

21. The secondary battery according to claim 14, wherein a solvent of the electrolyte is selected from at least one of ether compounds, acetal compounds, and ketal compounds.

22. An electric apparatus, comprising the secondary battery of any one of claims 14-21.
